# EUROPEAN PATENT APPLICATION

(11) **EP 1 696 424 A1**
(43) Date of publication of application: **30.08.2006**
(21) Application number: 05253334.6
(22) Date of filing: 31.05.2005
(51) Int. Cl.: G11B 5/31, G11B 5/187

(54) **Magnetic head and method of manufacturing the same**

(30) Priority: 24.02.2005 JP 2005048188
(71) Applicant: FUJITSU LIMITED, Kawasaki-shi, Kanagawa 211-8588 (JP)
(72) Inventor: Nara, Kiyotaka, Fujitsu Limited, Kawasaki-shi Kanagawa 211-8588 (JP); Yamada, Kiyomitsu, Fujitsu Limited, Kawasaki-shi Kanagawa 211-8588 (JP); Tachibana, Masanori, Fujitsu Limited, Kawasaki-shi Kanagawa 211-8588 (JP); Saito, Masahiro, Miyazaki-shi Miyazaki 880-0034 (JP); Kishida, Tatsuro, Fujitsu Limited, Kawasaki-shi Kanagawa 211-8588 (JP)
(74) Representative: Hitching, Peter Matthew

(57) **Abstract**

A highly reliable magnetic head is provided where fluctuation in the form of the upper magnetic pole is prevented and recording density is improved. The magnetic head is equipped with a recording head where a lower tip magnetic pole (20a) and an upper tip magnetic pole (50a) are formed facing one another on both sides of a write gap (11) and a coil (22) is disposed on a rear side of the lower magnetic pole (20). The lower tip magnetic pole (20a) is provided with an apex part (20b) by forming the surface on the rear side on which the coil (22) is disposed as an inclined surface, and an insulating layer (26) that covers the coil (22) is formed to the rear of the lower tip magnetic pole (20a). The upper surface of the lower tip magnetic pole (20a) and the upper surface of the insulating layer (26) are formed as flat surfaces that are flush and a flat planarized upper magnetic pole (50) is provided on the other side of the write gap.

## Description

### BACKGROUND OF THE INVENTION

### 1. Field of the Invention

The present invention relates to a magnetic head and a method of manufacturing the same, and in particular to a magnetic head and a method of manufacturing the same characterized by the construction of the recording head in the magnetic head.

### 2. Related Art

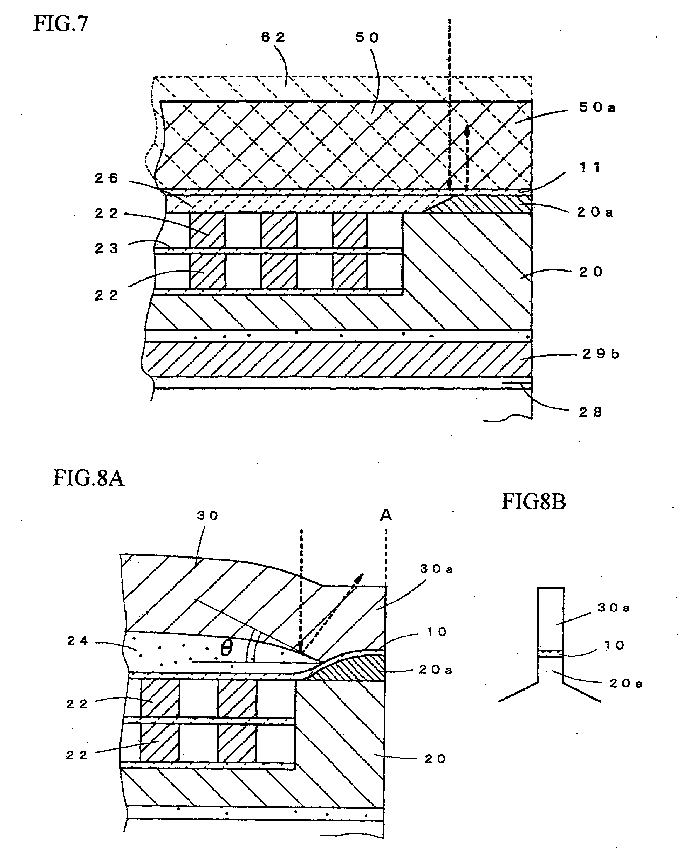

FIG 8A shows the cross-sectional construction of a recording head that composes a magnetic head. The recording head is constructed by disposing a lower magnetic pole 20 and an upper magnetic pole 30 on both sides of a write gap 10 and disposing a coil through which a recording current flows between the lower magnetic pole 20 and the upper magnetic pole 30. In FIG. 8A, the line A shows the floating surface of a magnetic head slider, with a lower tip magnetic pole 20a and an upper tip magnetic pole 30a being exposed on both sides of the write gap 10 on the floating surface.

FIG 8B shows the lower tip magnetic pole 20a and the upper tip magnetic pole 30a when looking from the floating surface-side. The lower tip magnetic pole 20a and the upper tip magnetic pole 30a are formed thinly to concentrate the magnetic field and enable high-density recording on a medium.

However, with a conventional magnetic head, as shown in FIG 8A, the upper magnetic pole 30 to the rear of the upper tip magnetic pole 30a is formed so as to be curved upward. The angle by which the curved part of the upper magnetic pole 30 rises with respect to the upper tip magnetic pole 30a is referred to as the apex angle (θ). The apex angle influences the recording characteristics of the recording head and methods of forming the upper magnetic pole 30 by controlling the apex angle have been proposed (see, for example, Patent Documents 1 to 3).

### Patent Document 1

Japanese Laid-Open Patent Publication No. 2000-182216

### Patent Document 2

Japanese Laid-Open Patent Publication No. 2001-76320

### Patent Document 3

Japanese Laid-Open Patent Publication No. 2002-197617

According to such methods of manufacturing a recording head, after the lower tip magnetic pole 20a has been formed in a slightly built-up shape on a front end-side of the lower magnetic pole 20, SiO₂ is sputtered on the surface of the lower tip magnetic pole 20a to form the write gap 10. Next, a bulging part 24 is formed using an insulating material in a gently raised shape on the SiO₂ layer on the rear of the lower tip magnetic pole 20a, and the upper magnetic pole 30 is formed upon such parts by electroplating.

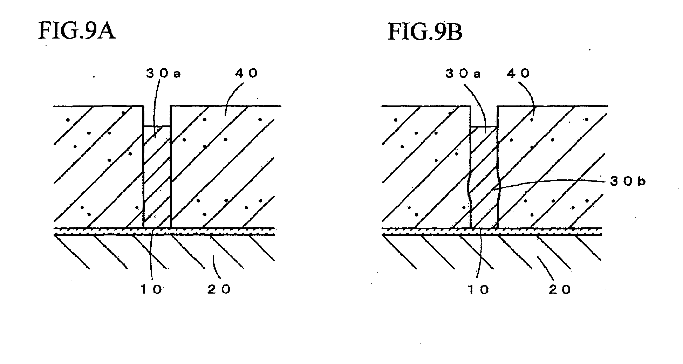

As shown in FIG 8B, the front tip of the upper magnetic pole 30 is formed as an extremely narrow upper tip magnetic pole 30a. When the upper magnetic pole 30 is formed by plating, as shown in FIG 9A, a resist 40 is exposed and developed so that the end surface where the upper front tip magnetic pole 30a will be formed is in the form of a narrow concave channel, and the upper tip magnetic pole 30a is formed by plating so as to be built up inside the concave channel. It should be noted that a magnetic material such as NiFe is used as the upper magnetic pole.

In reality, however, when the resist 40 is exposed and developed and the part that becomes the upper tip magnetic pole 30a is built up by plating, as shown in FIG. 9B, there are cases where a central part of the concave channel formed in the resist 40 slightly bulges. Since the base part on which the upper magnetic pole 30 is formed to the rear of the upper tip magnetic pole 30a is a curved surface, when the resist 40 is exposed, the irradiating light is scattered at an angle at the base surface, so that when the resist 40 is developed, slight displacements occur from the designed shape. FIG 8A shows how the light used to expose the resist 40 is scattered at the upper surface of the bulging part 24. Since a curved surface is continuous with another curved surface at the boundary part of the bulging part 24 and the lower tip magnetic pole 20a, the base surface of the upper magnetic pole 30 has a curved shape, which means that the irradiating light used to expose the resist 40 is scattered in a complex manner.

In the conventional magnetic head, the extending length of the lower tip magnetic pole 20a and the upper tip magnetic pole 30a (i.e., the depth of the write gap) is comparatively long, so that when the resist 40 is exposed, the scattering of light at the curved part does not cause problems regarding the precision of the shape of the upper tip magnetic pole 30a. However, when the depth of the write gap is narrow, the form of the surface of the bulging part 24 and the lower tip magnetic pole 20a influences the precision of the shape of the upper tip magnetic pole 30a and so causes fluctuation in the form of the magnetic pole.

### SUMMARY OF THE INVENTION

The present invention was conceived in order to solve the above problems and it is an object of the present invention to provide a magnetic head and a method of manufacturing the magnetic head where the recording characteristics and the reliability can be improved by preventing fluctuations in the form of the upper magnetic pole due to the influence of a curved part (the part where the apex angle is provided) formed in the upper magnetic pole to improve the recording characteristics, and the magnetic pole can be formed with higher precision.

To achieve the stated object, a magnetic head according to the present invention includes a recording head where a lower tip magnetic pole and an upper tip magnetic pole are formed facing one another with a write gap in between and a coil is disposed on a rear side of a lower magnetic pole, wherein an apex part is provided on the lower tip magnetic pole by forming a side surface, on a rear side where the coil is disposed, as an inclined surface, and an insulating layer that covers the coil is provided on the rear side of the lower tip magnetic pole.

An upper surface of the lower tip magnetic pole and an upper surface of the insulating layer may be formed as flat surfaces that are flush, and an upper magnetic pole that is formed flat may be provided on another side of a write gap layer.

The upper surfaces may be made flush by carrying out a polishing process on the upper surface of the lower tip magnetic pole and the upper surface of the insulating layer.

A method of manufacturing a magnetic head according to the present invention manufactures a magnetic head including a recording head where a lower tip magnetic pole and an upper tip magnetic pole are formed facing one another with a write gap in between and a coil is disposed on a rear side of a lower magnetic pole, the method including steps of: sputtering, on an exposed surface of the lower magnetic pole, a magnetic material that forms the lower tip magnetic pole so that a rear side on which the coil is disposed is an inclined surface; covering with an insulating material so that an upper surface of the coil forms a continuous surface with the magnetic material formed on the exposed surface of the lower magnetic pole; and polishing an upper surface of the magnetic material to a flat surface to partially expose the magnetic material as well as polishing an upper surface of the insulating layer covering the coil to become flush with the flat surface of the magnetic material to form the lower tip magnetic pole on whose rear side, on which the coil is disposed, an apex part is formed, and to form an insulating layer that covers the coil.

The method of manufacturing a magnetic head may further include, after the lower tip magnetic pole and the insulating layer have been formed, steps of: forming a write gap layer; covering an upper surface of the write gap layer with a resist, and exposing and developing the resist in accordance with a pattern of the upper magnetic pole to form a resist pattern; and forming the upper magnetic pole and the upper tip magnetic pole by building up a magnetic material by plating. According to this method of manufacturing, the upper surfaces of the lower tip magnetic pole and the insulating layer are formed as flush flat surfaces, so that the resist pattern that forms the upper magnetic pole can be formed with extremely high precision, the formation precision of the magnetic head can be improved, and magnetic heads with no fluctuations in quality can be obtained.

In the method of manufacturing a magnetic head, the step of sputtering the magnetic material as the lower tip magnetic pole may include steps of: forming a resist on the substrate to cover a side on which the coil is disposed to expose the lower magnetic pole and to form an eave-shaped protruding part on a side surface of the lower magnetic pole on the side on which the coil is disposed; sputtering a magnetic material on an exposed part of the resist and an exposed surface of the lower magnetic pole; and removing the resist and the magnetic material adhering to the resist by lifting off so as to leave only the magnetic material on the lower magnetic pole.

In addition, a CMP process may be carried out as the step of polishing the upper surface of the magnetic material to the flat surface to partially expose the magnetic material and polishing the upper surface of the insulating layer to become flush with the flat surface of the magnetic material.

According to the magnetic head and the method of manufacturing the magnetic head according to the present invention, the apex part is provided in the lower tip magnetic pole itself, so that the upper magnetic pole and the upper tip magnetic pole can be formed with extremely high precision with fluctuations being suppressed. By doing so, the recording density of the magnetic head can be further increased and a magnetic head with even higher reliability can be provided.

### BRIEF DESCRIPTION OF THE DRAWINGS

The aforementioned and other objects and advantages of the present invention will become apparent to those skilled in the art upon reading and understanding the following detailed description with reference to the accompanying drawings.

In the drawings:
FIG 1 is a cross-sectional view showing the construction of a magnetic head according to the present invention;
FIG 2 is a cross-sectional view showing the manufacturing process of the magnetic head;
FIG 3 is a cross-sectional view showing the manufacturing process of the magnetic head;
FIG 4 is a cross-sectional view showing the manufacturing process of the magnetic head;
FIG 5 is a cross-sectional view showing the manufacturing process of the magnetic head;
FIG. 6 is a cross-sectional view showing the manufacturing process of the magnetic head;
FIG 7 is a cross-sectional view showing the manufacturing process of the magnetic head;
FIGS. 8A and 8B are a cross-sectional view and an end surface view showing the construction of a conventional magnetic head; and
FIG 9A and 9B are diagrams useful in explaining a method of forming an upper tip magnetic pole.

### DESCRIPTION OF THE PREFERRED EMBODIMENTS

Preferred embodiments of the present invention will now be described in detail with reference to the attached drawings.

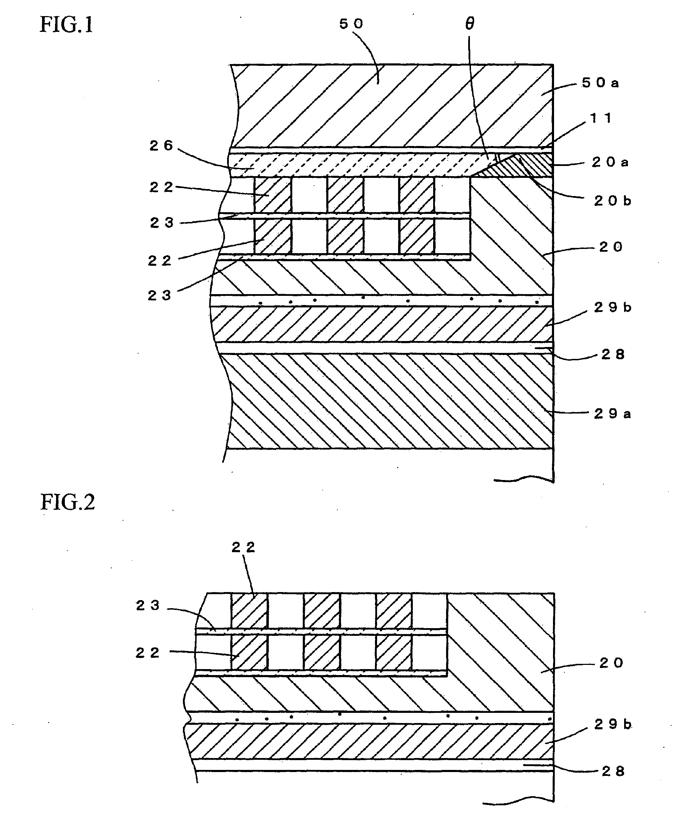

FIG. 1 is a cross-sectional view showing the construction of an embodiment of a magnetic head according to the present invention.

The construction of the magnetic head of the present embodiment is characterized as follows. A surface of the lower tip magnetic pole 20a formed at the tip of the lower magnetic pole 20 that faces an upper tip magnetic pole 50a is formed flush with the surface of an insulating layer 26, which is formed on an upper layer of a coil 22 disposed behind the lower magnetic pole 20, that faces the upper magnetic pole 50. Also, an apex part 20b that forms the angle θ with the plane of the upper magnetic pole 50 is formed at a rear of the lower tip magnetic pole 20a.

By forming the upper surface of the lower tip magnetic pole 20a flush with the upper surface of the insulating layer 26 formed on the upper layer of the coil 22, a write gap layer 11 is formed as a flat surface, with the upper magnetic pole 50 formed on the write gap layer 11 also being formed as a flat surface.

In the conventional magnetic head, as shown in FIG. 8A, the upper magnetic pole 30 is formed in a curved shape so as to rise at the apex angle θ from the rear of the upper tip magnetic pole 30a. On the other hand, in the magnetic head according to the present embodiment, the upper magnetic pole 50 is formed completely flat across the entire region of the upper magnetic pole 50 from the upper tip magnetic pole 50a.

The apex part 20b formed at the rear of the lower tip magnetic pole 20a is formed so that a side surface on the rear side of the lower tip magnetic pole 20a (i.e., the side on which the coil 22 is disposed) forms an inclined surface, with the inclined surface formed on the side surface of the lower tip magnetic pole 20a being provided so as to intersect a planar direction of the upper magnetic pole 50 at the angle θ.

Since the apex part 20b is formed in the lower tip magnetic pole 20a itself with the rear surface of the lower magnetic pole 20a as an inclined surface, by merely forming the upper magnetic pole 50 in a flat shape, it is possible to achieve the same effect of concentrating the magnetic flux at the recording head tip and thereby enabling high-density recording that was achieved by forming the upper magnetic pole 30 in the conventional magnetic head in a curved form that rises with the apex angle 9.

It should be noted that in the magnetic head according to the present embodiment, the coil 22 is formed with a two-layer structure and disposed behind the lower magnetic pole 20. The space between the layers of the coil 22 is electrically insulated by an insulating layer 23 made of alumina, and the adjacent windings in the coil 22 are electrically insulated by a resist.

An upper shield layer 29b and a lower shield layer 29a are formed on a lower layer of the lower magnetic pole 20 and sandwich an element forming layer in which an MR element 28 is formed.

FIGS. 2 to 7 show a method of manufacturing the magnetic head shown in FIG 1. The method of manufacturing the magnetic head described above will now be described below.

FIG 2 shows a state where the lower shield layer 29a composed of a magnetic layer has been formed on a substrate composed of Al₂O₃-TiC, the MR head 28 has been formed by a deposition process, and then the lower magnetic pole 20 and the coil 22 have been formed. The lower magnetic pole 20 is composed of a magnetic material such as NiFe, and is formed by forming a resist pattern on the substrate and carrying out electroplating to build up the lower magnetic pole 20 to a predetermined thickness. The coil 22 is formed by electrically insulating the space between the layers using the insulating layer 23 made of alumina, patterning the resist in accordance with the coil pattern, and building up conductive parts by electro copper plating.

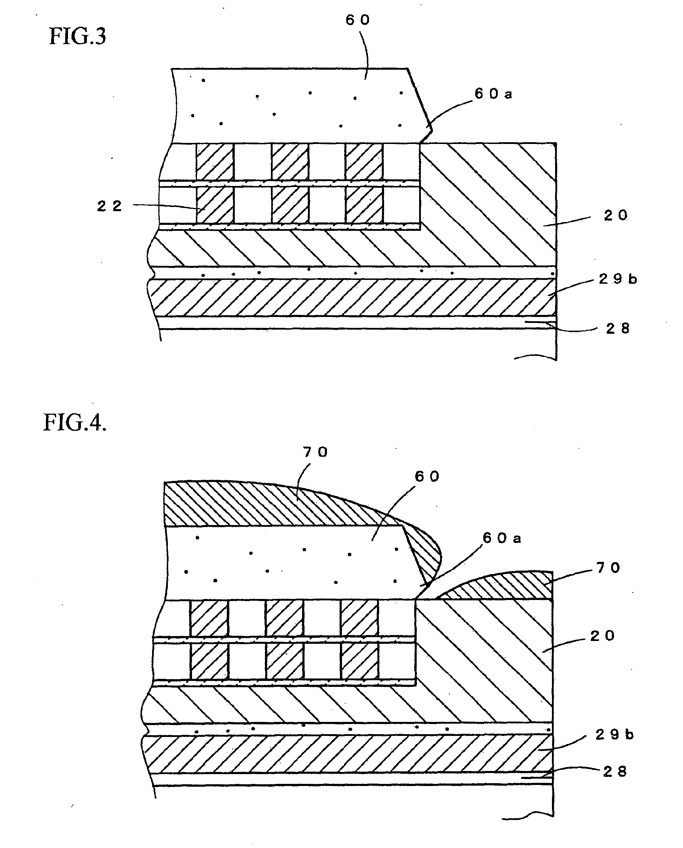

FIG 3 shows a state where in order to form the lower tip magnetic pole 20a on the surface (in the thickness direction) of the lower magnetic pole 20, the surface of the substrate has been covered with a resist 60 and the resist 60 has been exposed to light and developed to expose the surface of the lower magnetic pole 20. It should be noted that when the resist 60 is exposed to light and developed, as shown in FIG. 3, the side on which the coil 22 is disposed is covered and the lower magnetic pole 20 is exposed, and a protruding part 60a is formed on a side surface of the resist 60 that is located to the rear (i.e., on the side on which the coil 22 is disposed) of the lower magnetic pole 20. The protruding part 60a is provided so that when the lower tip magnetic pole 20a is formed by sputtering, the rear surface of the lower tip magnetic pole 20a becomes an inclined surface. The protruding part 60a is formed in a shape where the resist 60 is recessed toward the rear at a contact position between the resist 60 and the lower magnetic pole 20. In other words, the protruding part 60a is formed so as to protrude with an eave-like shape. The protruding part 60a can be formed by using a resist material in which an eave-like shape is formed when exposure to light and developing are carried out.

FIG 4 shows a state where, after the resist 60 has been formed by patterning on the surface of the substrate on which the lower magnetic pole 20 and the like have been formed, a magnetic material 70, for example, NiFe, that forms the lower tip magnetic pole 20a has been sputtered onto the surface of the substrate. The magnetic material 70 is attached so as to accumulate on the upper surface and side surface of the resist 60 and the exposed surface of the lower magnetic pole 20.

By forming the protruding part 60a on the side surface of the resist 60, the accumulated thickness of the magnetic material 70 that accumulates on the exposed surface of the lower magnetic pole 20 is thin at the rear of the lower magnetic pole 20 and becomes thicker on the floating surface side. By doing so, the magnetic material 70 is accumulated on the exposed surface of the lower magnetic pole 20 with a gradually inclined surface on the rear side.

By removing the resist 60 after sputtering the magnetic material 70 on the lower magnetic pole 20, the resist 60 and the magnetic material 70 that covers an outer surface of the resist 60 are simultaneously removed and the magnetic material 70 is left adhering only to the exposed surface of the lower magnetic pole 20 (a lift-off process).

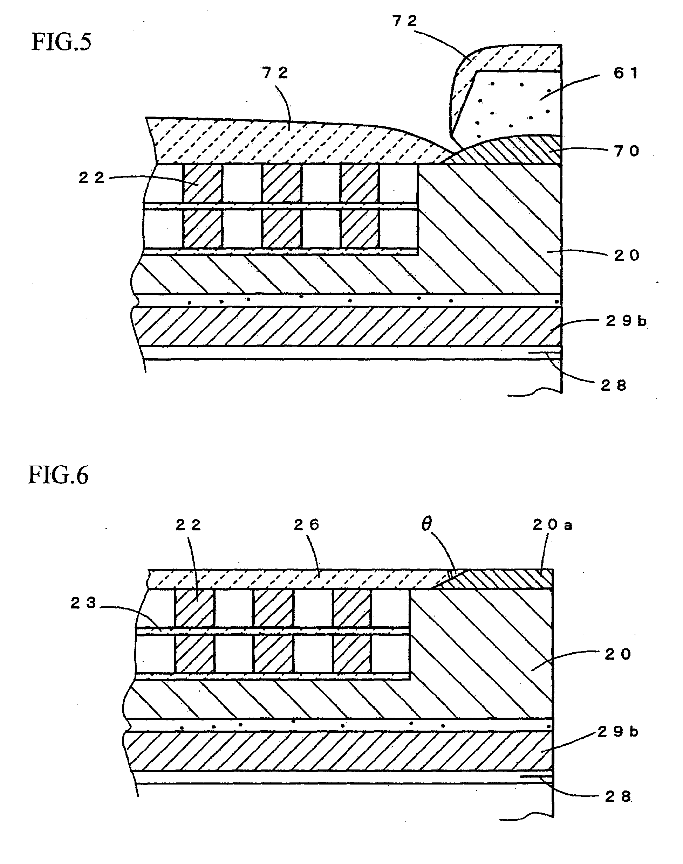

FIG. 5 shows a state where after the lift-off process, the surface of the magnetic material 70 has been covered with a resist 61 and alumina has been sputtered on the surface of the substrate to form the alumina layer 72. The covering thickness of the alumina layer 72 is set so that the upper surface of the coil 22 and the surface of the magnetic material 70 that has been built-up form a continuous surface.

FIG. 6 shows a state where the surface of the substrate on which the alumina layer 72 has been formed has next been subjected to a CMP (Chemical Mechanical Polishing) process to partially expose the upper surface of the magnetic material 70 and to polish the upper surface of the alumina layer 72 covering the coil 22 to a flat surface.

By polishing so that the upper surface of the magnetic material 70 is partially exposed, the lower tip magnetic pole 20a is formed so that an upper surface is a flat surface and the side surface on the rear (the side on which the coil 22 is formed) is an inclined surface. Since the magnetic material 70 is formed so that a rear side thereof is a gradually inclined surface, by controlling the thickness of the magnetic material 70 left by the CMP process, it is possible to control the inclination angle (the apex angle θ) of the lower tip magnetic pole 20a.

According to the CMP process, the magnetic material 70 and the alumina layer 72 are simultaneously polished so that the upper surface (the exposed surface) of the lower tip magnetic pole 20a formed by polishing the magnetic material 70 is formed as a flat surface that is completely flush with the upper surface of the insulating layer 26 formed by polishing the alumina layer 72.

It should be noted that the thickness of the insulating layer 26 is set at 3000 Angstroms or above, and the apex angle θ is set in a range of around 20° to 45 °.

Although the insulating layer 26 is formed using alumina in the present embodiment, it is possible to use another insulating material, such as silica, instead of alumina. Also, when polishing the magnetic material 70 and the alumina layer 72, it is possible to use a polishing process aside from the CMP process.

FIG. 7 shows a state where the upper magnetic pole 50 has been formed by carrying out plating after sputtering SiO₂ as the write gap layer 11 on the surface of the lower tip magnetic pole 20a and the insulating layer 26 that has been formed as a flat surface. Here, it is possible to use an insulating material aside from SiO₂ as the write gap layer 11.

As described above, when forming the upper magnetic pole 50, a resist 62 is attached to the substrate surface and the resist 62 is exposed to light and developed to form a concave channel with a narrow width at a front tip of the upper magnetic pole 50. A magnetic material such as NiFe is then plated inside the concave channel to build up and form the upper magnetic pole 50. In the conventional method of manufacturing a magnetic head, as shown in FIG. 9, since the lower surface on which the resist 40 is attached and formed is a curved surface, there has been the problem that the shape of the concave channel formed in the resist 40 becomes displaced from a predetermined shape, but with the method of manufacturing according to the present embodiment, the upper surface of the lower tip magnetic pole 20a and the insulating layer 26 that is the base for the resist 62 is formed as a completely flat surface, so that when the resist 62 is exposed to light, scattering of the irradiating light at an angle by the base layer can be avoided, so that it is possible to form the concave channel formed in the resist 62 with high precision.

In this way, according to the method of manufacturing a magnetic head according to the present embodiment, the upper tip magnetic pole 50a formed in the upper magnetic pole 50 can be formed with high precision compared to conventional magnetic heads and with a shape where fluctuations are thoroughly suppressed. According to the method of manufacturing the magnetic head according to the present embodiment, compared to the conventional method of manufacturing a magnetic head, the actual fluctuation in the write core width can be reduced from around 0.030µm to around 0.015 µm and the manufacturing yield can be improved by around 10%.

With the magnetic head according to the present embodiment, the end surface form of the upper tip magnetic pole 50a can be formed with high precision, the upper surface of the lower tip magnetic pole 20a is formed as a flat surface, and the thickness of the flat part is formed with uniform thickness, so that even if the depth of the write gap is made shallow, there is no fluctuation in the forms of the upper tip magnetic pole 50a and the lower tip magnetic pole 20a, resulting in the advantage that the formation precision of the magnetic head does not fall, even when the depth of the write gap is made shallower.

In this way, according to the magnetic head and the method of manufacturing the magnetic head according to the present invention, a magnetic head that is capable of recording at higher density and is highly reliable can be obtained easily.

## Claims

1. A magnetic head including a recording head where a lower tip magnetic pole and an upper tip magnetic pole are formed facing one another with a write gap in between and a coil is disposed on a rear side of a lower magnetic pole,
wherein an apex part is provided on the lower tip magnetic pole by forming a side surface, on a rear side where the coil is disposed, as an inclined surface, and
an insulating layer that covers the coil is provided on the rear side of the lower tip magnetic pole.

2. A magnetic head according to Claim 1,
wherein an upper surface of the lower tip magnetic pole and an upper surface of the insulating layer are formed as flat surfaces that are flush, and
an upper magnetic pole that is formed flat is provided on another side of a write gap layer.

3. A magnetic head according to Claim 2,
wherein by carrying out a polishing process on the upper surface of the lower tip magnetic pole and the upper surface of the insulating layer, the upper surfaces are made flush.

4. A method of manufacturing a magnetic head including a recording head where a lower tip magnetic pole and an upper tip magnetic pole are formed facing one another with a write gap in between and a coil is disposed on a rear side of a lower magnetic pole, the method comprising steps of:
sputtering, on an exposed surface of the lower magnetic pole, a magnetic material that forms the lower tip magnetic pole so that a rear side on . which the coil is disposed is an inclined surface;
covering with an insulating material so that an upper surface of the coil forms a continuous surface with the magnetic material formed on the exposed surface of the lower magnetic pole; and
polishing an upper surface of the magnetic material to a flat surface to partially expose the magnetic material as well as polishing an upper surface of the insulating layer covering the coil to become flush with the flat surface of the magnetic material to form the lower tip magnetic pole on whose rear side, on which the coil is disposed, an apex part is formed, and to form an insulating layer that covers the coil.

5. A method of manufacturing a magnetic head according to Claim 4, further comprising, after the lower tip magnetic pole and the insulating layer have been formed, steps of:
forming a write gap layer;
covering an upper surface of the write gap layer with a resist, and exposing and developing the resist in accordance with a pattern of the upper magnetic pole to form a resist pattern; and
forming the upper magnetic pole and the upper tip magnetic pole by building up a magnetic material by plating.

6. A method of manufacturing a magnetic head according to Claim 4,
wherein the step of sputtering the magnetic material as the lower tip magnetic pole includes steps of:
forming a resist on the substrate to cover a side on which the coil is disposed to expose the lower magnetic pole and to form an eave-shaped protruding part on a side surface of the lower magnetic pole on the side on which the coil is disposed;
sputtering a magnetic material on an exposed part of the resist and an exposed surface of the lower magnetic pole; and
removing the resist and the magnetic material adhering to the resist by lifting off so as to leave only the magnetic material on the lower magnetic pole.

7. A method of manufacturing a magnetic head according to Claim 4,
wherein a CMP process is carried out as the step of polishing the upper surface of the magnetic material to the flat surface to partially expose the magnetic material and polishing the upper surface of the insulating layer to become flush with the flat surface of the magnetic material.
